# NEUE EUROPÄISCHE PATENTSCHRIFT

(11) **EP 0 393 402 B2**
(45) Veröffentlichungstag und Bekanntmachung des Hinweises auf die Entscheidung über den Einspruch: **20.12.1995**
(45) Hinweis auf die Patenterteilung: 09.06.1993
(21) Anmeldenummer: 90106020.2
(22) Anmeldetag: 29.03.1990
(51) Int. Cl.: B01D 53/34, C01B 7/01

(54) **Verfahren zur Reinigung von schwermetallhaltigem Abgas mit hohem Chloridgehalt**
Process for the purification of heavy metal-containing waste gas with high chloride content
Procédé de purification de gaz d'échappement contentant des métaux lourds et à haute teneur en chlorure

(30) Priorität: 17.04.1989 DE 3912563; 29.11.1989 DE 3939413
(43) Veröffentlichungstag der Anmeldung: 24.10.1990
(73) Patentinhaber: Noell-KRC Umwelttechnik GmbH, 97064 Würzburg (DE)
(72) Erfinder: Kürzinger, Karl, Dr.-Ing., D-8702 Helmstadt (DE); Stephan, Rainer, Dr.-Ing., D-8755 Alzenau (DE)
(74) Vertreter: Werner, Hans-Karsten, Dr.Dipl.-Chem.

(56) Entgegenhaltungen:
- DE-A- 3 436 139
- DE-A- 3 611 886
- DE-A- 3 623 982
- DE-A- 3 623 983
- DE-A- 3 632 214
- DE-C- 2 634 959
- Sonderdruck aus "Chemie-Anlagen und Verfahren", Heft 8/76, Seiten 84-86
- Sonderdruck aus Umwelt Special Luftreinigung, Juni 1988, "Abgasreinigung hinter Müllverbrennungsanlagen"
- Prospekt Wiegand 1980
- "Luftreinigung durch Adsorption, Absorption und Oxidation", Harald Menig, Deutscher Fachschriften-Verlag, Braun & Co., KG, Wiesbaden, 1977, S.276/277
- Sonderdruck aus "Chemie-Technik 11", 1982, Heft 5, Seiten 483-484, R. Beijk, G. Klinke, "Salzsäuregewinnung mit Flüssigkeitsstrahl-Vakuumpumpen"

## Beschreibung

Gegenstand der vorliegenden Erfindung ist ein Verfahren zur Reinigung von schwermetallhaltigem Abgas mit hohem Chloridgehalt, von bis zu 10 g HCl/m³ aus Müllverbrennungsanlagen durch mehrstufige Absorption der Verunreinigungen, wobei in einer Vorstufe die stark sauren Bestandteile des Abgases, wie HCl und HF, mit Wasser ausgewaschen werden, welches zunächst bis zu 20 g HCl/l enthält und in späteren Stufen die weniger sauren Bestandteile des Abgases, wie SO₂ und NOₓ entfernt werden.

Neben SO₂ und NOₓ spielen bei der Reinigung von Rauchgasen auch HCl und HF eine große Rolle, insbesondere dann, wenn die Rauchgase aus einer Müllverbrennungsanlage stammen. Je nach Zusammensetzung des zur Verbrennung gelangten Mülls kann der HCl-Gehalt des Abgases sogar mehr als 10 g/m³ betragen. Solch hohe HCl-Gehalte bedürfen in der Regel einer besonderen Behandlung in Rauchgasreinigungsanlagen. Dies geschieht heutzutage vor allem dadurch, daß der SO₂-Reinigungsstufe eine HCl-Abscheidung vorgeschaltet wird. Die HCl-Abscheidung erfolgt hierbei oft simultan mit einer Quenchung des Rauchgases, wobei meist schon alkalische Chemikalien zugesetzt werden. Weiterhin wird bei dieser Quenchung auch ein großer Teil des im Abgas verbliebenenen Reststaubes abgeschieden.

Die bei diesem Abscheideprozeß gewonnene, meist noch salzsaure Lösung bzw. Suspension, enthält im allgemeinen den größten Teil der im Rauchgas enthaltenen Schwermetalle. Meist wird diese salzsaure Lösung bzw. Suspension einer Abwasserbehandlung zugeführt. Durch Zugabe von Alkali bzw. Erdalkalicarbonaten oder -hydroxiden erfolgt eine Neutralisation und Ausfällung der Schwermetalle. Nach Filtration der Suspension wird in der Regel das Filtrat einem Vorfluter zugeleitet oder eingedampft und der Rückstand einer Deponie zugeführt. Bei der Einleitung in einen Vorfluter enthält das Abwasser meist noch größere Mengen löslicher Salze sowie gewisse Restgehalte an Schwermetallen.

Sofern man aus diesen Rückständen verwertbare Salze, wie Kochsalz oder Calciumchlorid, gewinnen will, muß im allgemeinen eine aufwendige und effektive Abwasseraufbereitung der Eindampfung vorgeschaltet sein und unter Umständen die während des Eindampfens ausfallende Kristallmasse ein- bis mehrfach umkristallisiert werden, was mit entsprechend hohen apparativen und energetischen Aufwand verbunden ist und trotzdem im allgemeinen noch nicht die von der Praxis geforderten Reinheitsgrade für die Salze sicherstellt.

Die Erfindung hat sich die Aufgabe gestellt, das Verfahren zur Reinigung von Abgas mit hohem Chloridgehalt, insbesondere von Abgas aus Müllverbrennungsanlagen, weiter zu verbessern, zu vereinfachen und sicherer zu machen, wobei möglichst große Mengen wiederverwendbarer Produkte entstehen und nur wenig das Abwasser oder Deponien belastende Abfallstoffe entstehen. Insbesondere hat sich die Erfindung die Aufgabe gestellt, die Abscheidung der stark sauren Bestandteile des Abgases, wie HCl und HF so zu gestalten, daß hieraus zuverlässig und preiswert wiederverwendbare Substanzen gewonnen werden. Das Verfahren geht aus von solchen Verfahren, bei denen in einer Vorstufe die stark sauren Bestandteile des Abgases, wie HCl und HF, mit Wasser ausgewaschen werden, welches zunächst bis zu 20 g HCl/l enthält und bei denen in späteren Stufen die weniger sauren Bestandteile des Abgases, wie SO₂ und NOₓ entfernt werden (vgl. z.B. DE-A-3623982 oder DE-A-3623983).

Die Aufgabe kann dadurch überraschend einfach gelöst werden, daß bereits in der Vorstufe eine Aufkonzentration der Salzsäure auf über 50 g HCl/l, vorzugsweise über 80 g HCl/l erfolgt und die so erhaltene verdünnte Salzsäure durch Rektifikation in konzentriertere Salzsäure und eine Sumpffraktion aufgetrennt wird.

Es hat sich überraschenderweise gezeigt, daß es auf diese Art und Weise möglich ist, insbesondere azeotrope Salzsaure von ca. 22 % HCl/l zu gewinnen, die obendrein nahezu frei von Verunreinigungen, insbesondere von Schwermetallen ist. Dieses Ergebnis war besonders überraschend, da in dem zur Rektifikation kommenden aufkonzentrierten Salzsäuren noch immer größere Mengen an Schwermetallen und anderen wasser- und salzsäurelöslichen Salzen vorhanden sind und diese bei der Rektifikation dennoch ausschließlich in der Sumpffraktion verbleiben. Dies war nicht vorherzusehen, da es bekannt ist, daß in den Gasen von Müllverbrennungsanlagen auch wasserdampfflüchtige Metallchloride vorhanden sind. Weiterhin hat sich überraschenderweise gezeigt, daß die im Rektifikationssumpf sich anreichernden Feststoffe und Salze, wie z.B. Calciumsulfat, zu keinerlei Anbackungen und damit zu keinerlei Betriebsstörungen führen. Bei herkömmlichen Eindampfanlagen für chloridsalzhaltige Abwässer kommt es durch derartige Anbackungen zu häufigen Betriebsstörungen und zu längeren Betriebsunterbrechungen.

Sofern in der Vergangenheit in einer Vorstufe die stark sauren Bestandteile des Abgases, wie HCl und HF, nicht unter Zusatz von alkalischen Reagenzien, sondern nur mit Wasser ausgewaschen wurden, durfte die Konzentration an HCl maximal 20 g HCl/l betragen, da andernfalls zu große HCl-Mengen im Abgas verbleiben. Eine derartig verdünnte Salzsäure konnte aber aus Gründen der Wirtschaftlichkeit keinesfalls zu konzentrierterer Salzsäure verarbeitet werden. Erfindungsgemäß wird daher diese in der eigentlichen Absorptionsstufe anfallende verdünnte Salzsäure, welche bis zu 20 g HCl/l enthält, bereits in der Vorstufe einer Aufkonzentration auf über 50 g HCl/l unterworfen.

Vorzugsweise erfolgt die Aufkonzentration in dem Bereich von 80 bis 130 g HCl/l. Je nach HCl-Gehalt des Abgases sind aber auch noch höhere Aufkonzentrationen möglich. Diese Aufkonzentration in der Vorstufe kann beispielsweise dadurch erfolgen, daß die HCl-Wäsche kontinuierlich im Gegenstrom erfolgt und dabei schon eine konzentriertere Salzsäure anfällt.

Als vorteilhafter hat sich eine Aufkonzentration erwiesen, die diskontinuierlich im Gegenstrom erfolgt. Bei dieser Verfahrensweise wird das zu reinigende Abgas durch mindestens zwei Waschstufen geführt, wobei es zunächst mit Chargen verdünnterer Salzsäure in Kontakt gebracht wird, die dabei aufkonzentriert werden, um dann mit Chargen frischen Wassers gewaschen zu werden, welches sich bis auf 20 g HCl/l anreichern darf. Sobald diese für den zulässigen Rest-HCl-Gehalt des Abgases kritische Grenze erreicht ist, wird die Charge durch Frischwasser ersetzt. Die aufkonzentrierte Salzsäure von mindestens 50 g HCl/l wird entnommen und durch die verdünntere HCl-haltige Waschlösung von maximal 20 g HCl/l ersetzt.

Diese Verfahrensweise ist vor allem apparativ einfacher zu gestalten. Der Chargenwechsel kann in einfacher Weise durch Messung des Chloridgehaltes in den Waschlösungen gesteuert werden. Um das Verfahren flexibel zu gestalten, bietet sich an, für die verschiedenen Fraktionen der Waschlösungen Zwischentanks vorzusehen.

Eine weitere bevorzugte Ausgestaltung des Verfahrens besteht darin, daß die Aufkonzentration in einem Quencher erfolgt, in dem das Abgas auf Kühlgrenztemperatur gekühlt und Reststaub entfernt wird. In dem Sumpf eines derartigen Quenchers steigt der HCl-Gehalt ohne weiteres auf mindestens 50 g HCl/l. Dieser Quenchersumpf kann gegebenenfalls nach Abtrennung von Feststoffen unmittelbar in die Rektifikationsanlage eingegeben werden.

Aus der Rektifikationsanlage wird am Kopf Wasserdampf entnommen, der an beliebiger geeigneter Stelle in die Abgasreinigungsanlage zurückgeführt werden kann. Aus dem Sumpf wird eine nicht verbackende Suspension von Feststoffen und einem dem Rektifikationsdruck entsprechenden Gehalt an HCl entnommen. Weiterhin wird der Rektifikationskolonne das dem Rektifikationsdruck entsprechende azeotrope Gemisch aus HCl und Wasser entnommen. Sofern bei Normaldruck rektifiziert wird, erhält man eine azeotrope Salzsäure von ca. 22 % HCl/l. Wird eine höher konzentrierte Salzsäure gewünscht, muß man den Rektifikationsdruck erniedrigen. Wird bei höheren Drucken gearbeitet, erhält man ein azeotropes Gemisch von HCl und Wasser, das nach der Kondensation weniger als 22 % HCl/l enthält.

Bei der Rektifikation bei Normaldruck erhält man erfindungsgemäß zunächst eine azeotrope Salzsäure von ca. 22 % HCl/l, die nur Spuren von Schwermetallen, wie Quecksilber, enthält und nicht einmal durch HF verunreinigt ist, da dieses sich offensichtlich schon während der Aufkonzentration und spätestens während der Rektifikation mit den stets vorhandenen Calcium- und Siliziumverbindungen umsetzt und daher mit den Feststoffen aus dem Quenchersumpf und/oder dem Rektifikationssumpf aus dem Verfahren ausgeschleust werden.

Auf alle Fälle erhält man erfindungsgemäß zunächst dem jeweiligen Rektifikationsdruck entsprechende azeotrope Salzsäure, die frei von störenden Verunreinigungen ist und daher für die verschiedensten Zwecke eingesetzt werden kann. Gewünschtenfalls kann sie natürlich auch dazu verwendet werden, ausreichend reine Alkali- oder Erdalkalicarbonate und/oder -hydroxide zu neutralisieren und daraus technisch verwertbare saubere Salze zu gewinnen, die zumindest nicht die bisher üblichen hohen Gehalte an Schwermetall aufweisen.

Auch die Sumpffraktion der Rektifikation kann erfindungsgemäß in mehrfacher Weise verwertet werden. So ist es beispielsweise möglich, gegebenenfalls nach Abtrennung von Feststoffen, diese Sumpffraktion teilweise in die Aufkonzentrationsstufe zurückzuführen, zumal sie ja noch erhebliche Mengen an HCl enthält. Weiterhin ist es möglich, diese Sumpffraktion der Rektifikation teilweise in den Rauchgasstrom vor der Staubabscheidung einzudüsen. Dabei werden dann die festen Bestandteile zusammen mit dem Staub abgeschieden, während das HCl-Gas und das Wasser in das Verfahren zurückgeführt werden. Schließlich ist es möglich, die Sumpffraktion der Rektifikation teilweise der Flugascheaufbereitung zuzuführen und dadurch aus dem Verfahren auszuschleusen. Die Flugasche enthält im allgemeinen genügend alkalische Anteile, um den Salzsäuregehalt der Sumpffraktion zu neutralisieren und damit auch den aus dem Verfahren ausgeschleusten Anteil an HCl unschädlich zu machen.

Moderne Reinigungsanlagen für Abgase von Mullverbrennungsanlagen besitzen im zunehmenden Maße zusätzliche Kondensations- oder Naß-E-Filter. Das Abwasser dieser Filter kann problemlos als Absorbens für HCl und HF in der Vorstufe verwendet werden, so daß auch hier keine unerwünschten oder problematischen Abfallstoffe mehr entstehen.

Im Anschluß an die erfindungsgemäße Absorption der stark sauren Bestandteile des Abgases für HCl und HF mit Wasser erfolgt somit, gegebenenfalls nach Reinigung über Kondensations- oder Naß-E-Filter, die übliche Entfernung von SO₂ und NOₓ. Für die Entschwefelung hat sich insbesondere das Zweikreisverfahren der Anmelderin unter Verwendung von Kalkstein bewährt. Auch die nachgeschaltete Entfernung von NOₓ kann nach allen bisher üblichen und bekannt gewordenen Verfahren erfolgen.

Die Wasser- und Energiebilanz des erfindungsgemäßen Verfahrens zeigt, daß die Aufkonzentration der Salzsäure und anschließende Rektifikation zu konzentrierterer Salzsäure zu keinem spürbaren Anstieg des Wasser- oder Energieverbrauches führt. Der bei der Aufkonzentration und Rektifikation entstehende Dampf wird sowieso benötigt, um das zu reinigende Abgas für die Entschwefelungsanlage zu konditionieren. Aus dem Verfahren ausgeschleust wird nur der Wassergehalt der konzentrierteren azeotropen Salzsäure. Weiterhin fallen, wie beim Stand der Technik, Feststoffe an, die wie bisher bei dem Staubabscheider, dem Quenchersumpf und dem Abwasser von Kondensations- oder Naß-E-Filtern entnommen werden. Auch diese Fraktionen können erfindungsgemäß entweder wie bisher oder in leicht modifizierter Weise bearbeitet, verarbeitet oder weiterverwendet werden. Zusätzlich fällt bei dem erfindungsgemäßen Verfahren aber eine saubere und leicht verwendbare konzentrierte Salzsäure an, so daß auf die bisherige Beseitigung der Chloride verzichtet werden kann.

Für gewisse Anwendungszwecke wird aber auch eine höhere Konzentration von Salzsäure gefordert als das azeotrope Gemisch von 22 %. Auch eine derartige höher konzentrierte Salzsäure kann erfindungsgemäß hergestellt werden, indem das Rauchgas nach einem Quenchprozeß einer mehrstufigen, bezüglich der Flüssigphase diskontinuierlichen Absorption unterzogen wird, wobei in der ersten Stufe nach der Quenchstufe die Salzsäure auf die gewünschte Endkonzentration aufkonzentriert wird und die Feinreinigung des Rauchgases erst in der letzten Absorptionsstufe erfolgt.

Dabei wird das staubbeladene Abgas einer mindestens dreistufigen Naßwäsche unterzogen. Die erste Stufe ist als Gleichstrom-Sprühabsorber aufgebaut. In mehreren Sprühebenen wird das Rauchgas zunächst gequencht und von Staub und Schwermetallverbindungen weitgehend befreit. Das Waschmittel wird hierbei im Kreislauf geführt. Verdampfte Flüssigkeit wird periodisch oder kontinuierlich dem Quenchersumpf zugeführt. Durch eine zeitlich gesteuerte Ausschleusung von Flüssigkeit aus dem Quenchersumpf wird die Salzkonzentration im Waschmittel auf einen bestimmten Wert begrenzt.

In dieser ersten Stufe stellt sich eine HCl-Konzentration ein, die mit dem HCl-Gehalt des Rauchgases im Gleichgewicht steht. Das Rauchgas gelangt jetzt über einen Kaminboden in die zweite und von dort gegebenenfalls in die weiteren Stufen des Absorbers, die vorzugsweise als Gegenstrom-Füllkörperwäscher ausgelegt sind. In jeder Stufe wird das Wasser im Kreis geführt. Die erste Stufe nach dem Quencher wirkt hierbei als Aufkonzentrierstufe, während in den darauf folgenden und insbesondere in der letzten Stufe die Feinreinigung erfolgt. Ist der gewünschte Reingaswert am Ausgang des letzten Absorbers erreicht, kann die Feinreinigungsstufe kein HCl mehr aufnehmen, ohne daß der Reingaswert ansteigen würde. Spätestens zu diesem Zeitpunkt erfolgt die Ausschleusung der aufkonzentrierten Säure der letzten Stufe in den Vorlagebehälter der vorgeschalteten Stufe, in der sie weiter aufkonzentriert werden kann. Die letzte oder Feinreinigungsstufe wird nach dem Flussigkeitswechsel mit frischem Wasser oder angefallenem Abwasser aus dem Gesamtprozeß beschickt.

Bei dieser Schaltung ist die Aufkonzentrierung in der vorletzten Stufe stark abhängig von dem geforderten HCl-Reingaswert. Ist dieser hoch angesiedelt, vergeht eine relativ lange Zeit bis sich die zum Reingaswert zugehörige Gleichgewichtskonzentration in der Flüssigphase eingestellt hat. Entsprechend lange kann die Aufkonzentrierung in der davor geschalteten Stufe erfolgen, wobei sich hier maximal die Konzentration einstellen kann, die mit dem HCl-Partialdruck am Eintritt der vorletzten Stufe im Gleichgewicht steht.

Da jedoch meist sehr niedrige Reingaswerte gefordert werden (<5-10 mg/m³) wird mit nur drei Stufen die Gleichgewichtskonzentration nicht erreicht. Um eine hoch konzentrierte Salzsäure einerseits und einen niedrigen Reingaswert andererseits zu erhalten, ist es daher im allgemeinen nötig, in insgesamt vier Absorptionsstufen zu arbeiten.

Eine zweckmäßige Variante des erfindungsgemäßen Verfahrens nutzt die zur Quenchung notwendige Wassermenge aus zur Feinreinigung des Abgases. Dazu wird diese Wassermenge in der letzten Stufe zugegeben und nimmt dort die restliche Salzsäure auf. Diese sehr verdünnte Salzsäure wird dann direkt in die Quenchstufe geleitet. Diese Schaltung ermöglicht es, eine längere Zeit zu warten, bis der Flüssigkeitswechsel erfolgen muß, so daß in den mittleren Stufen höhere Konzentrationen erzielt werden.

Eine weitere vorteilhafte Ausgestaltung des erfindungsgemäßen Verfahrens besteht darin, eine bestimmte Zeit vor Erreichen des Reingaswertes am Ausgang des letzten Absorbers die Flüssigkeitszufuhr in der Quenchstufe abzustellen. Durch das heiße Rauchgas wird ein Teil der Quencherflüssigkeit verdampft, so daß die darin enthaltene Salzsäure zum erheblichen Teil in die Gasphase freigesetzt wird. Am Ausgang dieser Stufe ist somit der HCl-Partialdruck erhöht, wodurch sich auch die Salzsäurekonzentration in der danach folgenden Aufkonzentrierstufe erhöht.

Während der Zeit der HCl-Verdampfung in der Quenchstufe wird die dafür vorgesehene Wassermenge in den Waschkreislauf der Feinreinigungsstufe gegeben, deren Pumpenvorlagebehälter nur entsprechend groß dimensioniert sein muß. Die HCl-Verdampfung im Quencher kann solange erfolgen, bis der gewünschte Reingaswert nach der Feinreinigung erreicht ist. Beim Flüssigkeitswechsel wird dann der gespeicherte Flüssigkeitsanteil dem Quenchersumpf zugegeben. Insbesondere wenn das Rauchgas schon relativ stark abgekühlt in die Quenchstufe eintritt, verringert sich die zur Quenchung notwendige Wassermenge. Es ist dann sinnvoll, das beschriebene HCl-Verdampfungsverfahren einzusetzen und das Gesamtverfahren um eine Stufe zu erweitern. Es ist dann möglich, bei gleichem niedrigen HCl-Reingaswert dennoch in der Aufkonzentrierstufe die geforderte hohe HCl-Konzentration zu erreichen. Es ist somit durchaus möglich, auch aus relativ stark abgekühlten Rauchgasen mit niedrigem HCl-Gehalt über mehrere Stufen eine hoch konzentrierte Salzsäure zu erhalten und dennoch niedrige HCl-Reingaswerte einzuhalten.

Das erfindungsgemäße Verfahren kann durch Messung der HCl-Reingaswerte in der Gasphase gesteuert werden. Sobald der geforderte HCl-Reingaswert erreicht wird, erfolgt der beschriebene Flüssigkeitswechsel von den nachgeschalteten Stufen zu den vorgeschalteten Stufen.

Das erfindungsgemäße Verfahren wird durch das nachfolgende Beispiel unter erschwerten Betriebsbedingungen naher erläutert:

### BEISPIEL

In einer Müllverbrennungsanlage werden Abgase mit ca. 1,5 g HCl/m³ nach einem Staubabscheider einem Quencher zugeführt, der mit Betriebswasser gespeist wird. In diesem Quencher sammelt sich restlicher Feinstaub an. Weiterhin steigt im Quenchersumpf die Konzentration an HCl durch die Wasserverdampfung auf 60 bis 70 g HCl/l. Der Quenchersumpf wird nach Abtrennung der Feststoffe über eine Zentrifuge in eine Rektifikationsanlage eingeschleust, aus der am Kopf Wasserdampf und am Sumpf eine salzsaure, nicht verbackende Suspension von Feststoffen entnommen wird. Ungefähr am unteren Drittel der Rektifikationskolonne wird das azeotrope Gemisch von HCl und Wasser entnommen. Nach der Kondensation ergibt es eine ungefärbte Salzsäure mit einem Gehalt von 22 % HCl/l. Der Gehalt an Quecksilber und sonstigen Schwermetallen liegt unter der Nachweisgrenze bzw. im Bereich handelsüblicher azeotroper Salzsäure. Der Rauchgasstrom der Verbrennungsanlage wird vom Quencher in eine zweite Waschstufe mit Wasser geleitet, in der dafür gesorgt wird, daß der Gehalt an Salzsäure nicht über 20 g HCl/l steigt. Damit ist gewährleistet, daß der diese Waschstufe verlassende Abgasstrom nur noch den zulässigen HCl-Gehalt aufweist. Die verdünnte Salzsäure dieser Waschstufe wird in den Quencher geleitet.

Nach dieser Chloridwäsche befindet sich ein Naß-E-Filter. Von diesem aus wird der Abgasstrom in einen Zweikreis-Absorptionswäscher mit Kalkstein geleitet und entschwefelt. Das Abwasser des Naß-E-Filters wird dem Waschwasser der Chloridwäsche zugeleitet.

## Patentansprüche

1. Verfahren zur Reinigung von schwermetallhaltigem Abgas mit hohem Chloridgehalt, von bis zu 10 g HCl/m³ aus Müllverbrennungsanlagen durch mehrstufige Absorption der Verunreinigungen, wobei in einer Vorstufe die stark sauren Bestandteile des Abgases, wie HCl und HF, mit Wasser ausgewaschen werden, welches zunächst bis zu 20 g HCl/l enthält, und in späteren Stufen die weniger sauren Bestandteile des Abgases, wie SO₂ und NOₓ, entfernt werden, dadurch gekennzeichnet, daß bereits in der Vorstufe eine Aufkonzentration der Salzsäure auf über 50 g HCl/l, vorzugsweise über 80 g HCl/l erfolgt und die so erhaltene verdünnte Salzsäure durch Rektifikation in konzentriertere Salzsäure und eine Sumpffraktion aufgetrennt wird.

2. Verfahren gemäß Anspruch 1, dadurch gekennzeichnet, daß die Aufkonzentration der Salzsäure diskontinuierlich im Gegenstrom erfolgt.

3. Verfahren gemäß Anspruch 1 oder 2, dadurch gekennzeichnet, daß die Aufkonzentration in einem Quencher erfolgt, in dem das Abgas auf Kühlgrenztemperatur gekühlt und Reststaub entfernt wird.

4. Verfahren gemäß Anspruch 1 oder 2, dadurch gekennzeichnet, daß die Aufkonzentration zwischen einem Quencher und der Absorptionsstufe für HCl erfolgt.

5. Verfahren gemäß einem der Ansprüche 1 bis 4, dadurch gekennzeichnet, daß die Rektifikation bei Normaldruck erfolgt und eine azeotrope Salzsäure von ca. 22 % HCl/l abgetrennt wird.

6. Verfahren gemäß einem der Ansprüche 1 bis 5, dadurch gekennzeichnet, daß die Sumpffraktion der Rektifikation gegebenenfalls nach Abtrennung von Feststoffen teilweise in die Aufkonzentrationsstufe zurückgeführt wird.

7. Verfahren gemäß einem der Ansprüche 1 bis 5, dadurch gekennzeichnet, daß die Sumpffraktion der Rektifikation teilweise in den Rauchgasstrom vor der Staubabscheidung eingedüst wird.

8. Verfahren gemäß einem der Ansprüche 1 bis 5, dadurch gekennzeichnet, daß die Sumpffraktion der Rektifikation teilweise der Flugascheaufbereitung zugeführt wird.

9. Verfahren gemäß einem der Ansprüche 1 bis 8, dadurch gekennzeichnet, daß das Abwasser eines nachgeschalteten Kondensations- oder Naß-E-Filters in der Vorstufe als Absorbens verwendet wird.

10. Verfahren gemäß einem der Ansprüche 1 bis 3, dadurch gekennzeichnet, daß das Rauchgas nach einem Quenchprozeß einer mehrstufigen, bezuglich der Flüssigphase diskontinuierlichen Absorption unterzogen wird, wobei in der ersten Stufe nach der Quenchstufe die Salzsaure auf die gewünschte Endkonzentration aufkonzentriert wird und die Feinreinigung des Rauchgases erst in der letzten Absorptionsstufe erfolgt.

11. Verfahren gemäß einem der Ansprüche 3 bis 4, dadurch gekennzeichnet, daß eine bestimmte Zeit vor Erreichen des Reingaswertes am Ausgang des letzten Absorbers die Flüssigkeitszufuhr in der Quenchstufe abgestellt und während dieser Zeit die entsprechende Wassermenge in den Waschkreislauf der Feinreinigungsstufe gegeben wird.

12. Verfahren nach Ansprüchen 3 bis 4, dadurch gekennzeichnet, daß die zur Quenchung notwendige Wassermenge zur Feinreinigung des Abgases genutzt wird, indem diese Wassermenge in der letzten Stufe zur Aufnahme der restlichen Salzsäure zugegeben und die erhaltene sehr verdünnte Salzsäure dann direkt in die Quenstufe geleitet wird.

## Claims

1. A process for the purification of a flue gas containing heavy metal(s) and having a high chloride content of up to 10 g of HCl per 1 m³ of gas from a garbage incineration plant, by means of a multi-step absorption of the contaminations, wherein in a first step the strongly acidic components of the waste gas such as HCl and HF are removed by washing with water which first contains up to 20 g/l of HCl, and in subsequent steps the less acidic components of the waste gas such as SO₂ and NOₓ are removed, characterized in that already in the first step the hydrochloric acid is concentrated to a level in excess of 50 g/l of HCl, and preferably in excess of 80 g/l of HCl, and the diluted hydrochloric acid thus obtained is separated by rectification into a more concentrated hydrochloric acid and a bottoms fraction.

2. The process according to claim 1, characterized in that the operation of concentrating the hydrochloric acid is carried out in a discontinuous mode by counter-current.

3. The process according to claims 1 or 2, characterized in that the concentrating operation is carried out in a quencher wherein the flue gas is cooled to the limiting temperature of cooling and the residual dust is removed.

4. The process according to claims 1 or 2, characterized in that the concentrating operation is carried out between a quencher and the absorption stage for HCl.

5. The process according to anyone of the claims 1 to 4, characterized in that the rectification is carried out at normal pressure and an azeotropic hydrochloric acid of about 22% by weight of HCl is recovered.

6. The process according to anyone of the claims 1 to 5, characterized in that part of the bottoms fraction of the rectification is recycled to the concentrating stage, optionally after the removal therefrom of the solids.

7. The process according to anyone of the claims 1 to 5, characterized in that part of the bottoms fraction of the rectification is jetted into the flue gas stream prior to the dust deposition.

8. The process according to anyone of the claims 1 to 5, characterized in that part of the bottoms fraction of the rectification is passed to the fly ashes processing step.

9. The process according to anyone of the claims 1 to 8, characterized in that the effluent water from a subsequent condensation filter or wet-E filter is used as an absorbent in the first step.

10. The process according to anyone of the claims 1 to 3, characterized in that the flue gas, after the quenching procedure, is subjected to a multi-stage discontinuous absorption, with respect to the liquid phase, wherein in a first step following the quenching step the hydrochloric acid is concentrated to the desired final concentration, while the fine-cleaning of the flue gas is effected not before in the last absorption step.

11. The process according to anyone of the claims 3 to 4, characterized in that a certain time before the specified value of the purified gas will be reached at the last absorber the liquid supply in the quenching stage is turned off, and during this time the corresponding quantity of water is fed into the water circulation of the fine-cleaning stage.

12. The process according to anyone of the claims 3 to 4, characterized in that the quantity of water required for quenching is utilized for the fine-cleaning of the flue gas by adding said amount of water for absorbing the residual hydrochloric acid in the last stage, and the resulting very diluted hydrochloric acid is then directly introduced into the quenching stage.

## Revendications

1. Procédé de purification de gaz de fumées d'usines d'incinération d'ordures ménagères, à haute teneur en chlorures et contenant des métaux lourds, par absorption des impuretés, en plusieurs opérations, les constituants très acides du gaz d'échappement, comme HCl et HF, étant éliminés, lors d'une opération préalable, par lavage avec de l'eau qui contient d'abord jusqu'à 20 g de HCl/l, et les constituants moins acides du gaz d' échappement, comme SO₂ et NOₓ, étant éliminés lors d'opérations ultérieures, caractérisé en ce que, dès l'opération préalable, on concentre l'acide chlorhydrique à plus de 50 g HCl/l, de préférence plus de 80 g HCl/l, et on divise l'acide chlorhydrique dilué ainsi obtenu, par rectification, en acide chlorhydrique plus concentré et en une fraction de bas de colonne.

2. Procédé selon la revendication 1, caractérisé en ce qu'on effectue la concentration de l'acide chlorydrique de manière discontinue à contre-courant.

3. Procédé selon la revendication 1 ou 2, caractérisé en ce qu'on effectue la concentration dans un appareil de refroidissement par injection de liquide, dans lequel le gaz d'échappement est refroidi à la température limite de refroidissement, et la poussière résiduelle est éliminée.

4. Procédé selon la revendication 1 ou 2, caractérisé en ce qu'on effectue la concentration entre un passage dans un appareil de refroidissement par injection de liquide et l'opération d'absorption de HCl.

5. Procédé selon une des revendications 1 à 4, caractérisé en ce que la rectification se déroule à la pression normale, et on sépare un azotrope d'acide chlorhydrique à environ 22 % HCl/l.

6. Procédé selon une des revendications 1 à 5, caractérisé en ce qu'une partie de la fraction de bas de colonne de la rectification est recyclée dans l'installation de concentration, éventuellement après séparation de substances solides.

7. Procédé selon une des revendications 1 à 5, caractérisé en ce qu'une partie de la fraction de bas de colonne de la rectification est injectée dans le flux de gaz de fumée avant la séparation des poussières.

8. Procédé selon une des revendications 1 à 5, caractérisé en ce qu'une partie de la fraction de bas de colonne de la rectification est utilisée pour le traitement des cendres volantes.

9. Procédé selon une des revendications 1 à 8, caractérisé en ce qu'on utilise les eaux usées d'un filtre de condensation ou d'un filtre de dépoussiérage humide, monté en aval, comme absorbant pour l'opération préalable.

10. Procédé selon une des revendications 1 à 3, caractérisé en ce que le gaz de fumée est soumis, après une opération de refroidissement par injection de liquide, à une absorption en plusieurs étapes, discontinue en ce qui concerne la phase liquide, l'acide chlorhydrique étant concentré à la concentration finale souhaitée lors de la première opération suivant l'opération de refroidissement par injection de liquide, et la purification poussée du gaz de fumée n'a lieu que pendant la dernière opération d'absorption.

11. Procédé selon la revendication 3 ou 4, caractérisé en ce que l'envoi de liquide pour l'opération de refroidissement par injection de liquide est stoppé un certain temps avant l'obtention de la valeur du gaz purifié à la sortie du dernier absorbeur, et, pendant ce temps, la quantité d'eau correspondante est amenée dans le circuit de lavage pour l'opération de purification poussée.

12. Procédé selon la revendication 3 ou 4, caractérisé en ce que la quantité d'eau nécessaire au refroidissement par injection de liquide est utilisée, pour la purification poussée du gaz de fumée, cette quantité d'eau étant amenée dans la dernière opération pour l'absorption de l'acide chlorhydrique restant, et ensuite, l'acide chlorhydrique très dilué obtenu est amené directement dans l'opération de refroidissement par injection de liquide.
